(19) **Europäisches Patentamt European Patent Office Office européen des brevets**

(11) **EP 4 741 321 A1**

(12) **EUROPÄISCHE PATENTANMELDUNG**

(43) Veröffentlichungstag:
**13.05.2026 Patentblatt 2026/20**

(21) Anmeldenummer: **24211773.7**

(22) Anmeldetag: **08.11.2024**

(51) Internationale Patentklassifikation (IPC):
**B65G 43/08** (2006.01)   **B65G 43/10** (2006.01)
**B65G 47/31** (2006.01)

(52) Gemeinsame Patentklassifikation (CPC):
**B65G 47/31; B65G 43/08; B65G 43/10**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **Siemens Logistics GmbH**
**90429 Nürnberg (DE)**

(72) Erfinder: **Aschpurwis, Carsten**
**78464 Konstanz (DE)**

(74) Vertreter: **Siemens Patent Attorneys**
**Postfach 22 16 34**
**80506 München (DE)**

(54) **VERFAHREN UND VORRICHTUNG ZUR BESCHLEUNIGUNG EINES GÜTERSTROMS**

(57)   Zur Beschleunigung ($\pm$) eines Güterstroms (6) wird ein Verfahren und eine Vorrichtung (5) mit folgenden Merkmalen vorgeschlagen: Der Güterstrom ($6_i$) wird gebildet von auf einem Zuförderer (1) herangeführten Fördergütern ($10_1, 10_2, ..., 10_M$). Der Zuförderer (1) ist an die Vorrichtung (5) zur Beschleunigung angeschlossen.

Die Vorrichtung (5) enthält eine Kaskade von in Förderrichtung (r) aufeinanderfolgenden Förderbändern ($22_1, 22_2, ..., 22_N$), die je einen eigenen, individuell steuerbaren Antrieb ($20_1, 20_2, ...$) aufweisen.

Für eine positive Beschleunigung (+) des Güterstroms ist die Länge der Förderbänder ($22_1, 22_2, ..., 22_N$) in der Kaskade stufenweise grösser ausgebildet, um so unter Einhaltung von Haftreibungsbedingungen zwischen Förderband ($22_1, 22_2, ..., 22_N$) und darauf befindlichem Fördergut ($10_1, 10_2, ..., 10_M$) die Fördergüter einzeln auf jedem Förderband zu beschleunigen. Bei einer negativen Beschleunigung des Güterstroms ist die Länge der Förderbänder (221, 222, ..., 22N) in der Kaskade entsprechend stufenweise kleiner ausgebildet.

FIG 2

**Beschreibung**

Die vorliegende Erfindung betrifft das technische Gebiet von Fördersystemen für Stückgüter wie dies rein beispielhaft in der Schrift WO 2022/002510 A1 [1] erläutert ist.

Bei Fördersystem wird ein Gutstrom - auch Güterstrom genannt - über verschiedene Prozesseinheiten wie zB eine Sortiereinheit (Fachbegriff «Sorter»), eine Vereinzelungseinheit usw. geführt. Dabei muss die Geschwindigkeit eines solchen Gutstroms vor der jeweiligen Prozesseinheit auf eine bestimmte Grösse eingestellt sein. Diese Einstellung erfolgt durch eine entsprechende Beschleunigung des Gutstroms vorgenommen. Der Begriff «Beschleunigung» ist dabei eine vorzeichenbehaftete Grösse wie dies in der Quelle [2] im Einzelnen beschrieben ist.

> i) Eine negative Beschleunigung wird als Abbremsen [eines Güterstroms] verstanden.
> ii) Eine positive Beschleunigung bewirkt eine Geschwindigkeitserhöhung des Güterstroms.

Als Beispiel wird ein Strom von Reisegepäck auf einem Flughafengelände erwähnt: Das Reisegepäck der Passagiere muss je nach Flughafen über mehrere Kilometer Distanz zu einem Terminal transportiert werden. Dabei sind die Gepäckstücke auf Trays gelegt. Für diesen «Ferntransport» muss - um unerwünschte Verzögerungen für Abflug und Ankunft zu vermeiden die Fördergeschwindigkeit erhöht werden. Als Beispiel wird eine Geschwindigkeit von 7.5m/s hier angegeben. Für die Verteilung/Sortierung des Reisegepäcks ist in der Regel eine Geschwindigkeit von 2 bis 3m/s als obere Grenze anzusehen.

Da in solchen Fördersystemen die Geschwindigkeiten wie auch die erforderlichen Beschleunigung ganz erhebliche Werte annehmen können, löst eine Beschleunigung des Antriebsmotors eines Förderbandes ohne weitere Massnahmen mit darauf befindlichen Fördergütern dieses Problem aus zwei Gründen nicht:

> i) Eine zu hohe Beschleunigung kann die relative Lage der Güter untereinander in nicht kontrollierbarer Weise verändern;
> ii) in einer Gesamtbetrachtung ändert der Durchsatz einer solchen Beschleunigungseinheit nicht und somit würden bei der Lösung mit einer Beschleunigung des Antriebsmotors für nachfolgende Fördergüter die Abstände zwischen den Fördergütern in einer nicht kontrollierbarer, dh in nicht steuerbaren Weise verändert.

Der vorliegenden Erfindung liegt daher die Aufgabe zugrunde, ein Verfahren und eine Vorrichtung zur Beschleunigung eines Güterstroms anzugeben, das zuverlässig eine individuelle Beschleunigung der einzelnen Fördergüter ermöglicht und die vorgenannten Nachteile vermeidet. Diese Aufgabe wird durch die in den unabhängigen Ansprüchen angegebenen Merkmale gelöst.

Das erfindungsgemässe Verfahren ist in einem unabhängigen Patentanspruch mit dem folgenden Wortlaut definiert: Verfahren zur Beschleunigung ($\pm$) eines Güterstroms ($6_i$), der gebildet wird von auf einem Zuförderer (1) herangeführten Fördergütern ($10_1, 10_2, \ldots, 10_M$) in einer Förderrichtung (r) zu einer Vorrichtung (5), wobei in der Förderrichtung (r) an die Vorrichtung (5) ein Wegförderer (2) zur Weiterbeförderung des beschleunigten Güterstroms ($6_o$) angeschlossen ist und diese Vorrichtung (5) umfasst:
eine Kaskade von in Förderrichtung (r) aufeinanderfolgenden Förderbändern ($22_1, 22_2, \ldots$), die je ein umlaufendes Band (21) und je einen eigenen, individuell steuerbaren Antrieb ($20_1, 20_2, \ldots$) aufweisen; bei welchem Verfahren folgende Schritte ausgeführt werden:

> a) Fördern eines Förderguts ($10_1, 10_2, \ldots, 10_M$) auf dem Zuförderer (1) hin zum stromabwärts ersten anzutreffenden Förderband ($22_1$) der Vorrichtung (5) und Antreiben dieses ersten Förderbandes ($22_1$) mit der gleichen Geschwindigkeit wie der Geschwindigkeit des Zuförderers (1);
> b) erfassen der Position der Hinterkante (11) des Förderguts ($10_1, 10_2, \ldots, 10_M$) wenn das Fördergut ($10_1, 10_2, \ldots, 10_M$) den Zuförderer (1) verlässt;
> c) beschleunigen ($\pm$) des das Fördergut ($10_1, 10_2, \ldots, 10_M$) tragenden Förderbands ($22_1, 22_2, \ldots, 22_N$) unter Einhaltung von Haftreibungsbedingungen zwischen Förderband ($22_1, 22_2, \ldots$) und darauf befindlichem Fördergut ($10_1, 10_2, \ldots, 10_M$);
> d) antreiben des nachfolgenden Förderbands ($22_1, 22_2, \ldots$) mit der gleichen Geschwindigkeit wie jener des kommenden Förderguts ($10_1, 10_2, \ldots, 10_M$) auf dem vorangehenden Förderband ($22_1, 22_2, \ldots$) zur Übernahme eines Förderguts ($10_1, 10_2, \ldots, 10_M$);
> e) Wiederholung der Verfahrensschritte c) und d) bis das betreffende Fördergut ($10_1, 10_2, \ldots, 10_M$) die Kaskade der in Förderrichtung (r) aufeinanderfolgenden Förderbänder ($22_1, 22_2, \ldots, 22_N$) durchlaufen hat und sich auf dem Wegförderer (2) befindet.

Die erfindungsgemässe Vorrichtung ist in einem unabhängigen Patentanspruch mit dem folgenden Wortlaut definiert: Vorrichtung (5) zur Beschleunigung ($\pm$) eines Güterstroms (6) enthaltend eine Mehrzahl von Fördergütern ($10_1, 10_2, \ldots, 10_M$) bei der ein Zuförderer (1) für die Zuführung der Fördergüter ($10_1, 10_2, \ldots, 10_M$) und ein Wegförderer (2) für einen Weitertransport der Fördergüter ($10_1, 10_2, \ldots, 10_M$) angeschlossen ist,
dadurch gekennzeichnet, dass

> a) die Vorrichtung (5) eine Kaskade von in Förderrichtung (r) aufeinanderfolgenden Förderbändern ($22_1, 22_2, \ldots$) enthält, die je ein umlaufendes Band ($21_1, 21_2, \ldots, 21_N$) und je einen eigenen, individuell über eine Steuerung steuerbaren Antrieb $(20_1, 20_2, ...)$ aufweisen, um die Fördergüter $(101, 102, ... , 10_M)$ sukzessive auf den Förderbändern $(22_1, 22_2, ...)$ unter Haftreibungsbedingungen zwischen Fördergut (10) und Förderband (22) zu beschleunigen ($\pm$);

b) die Steuerung die Antriebe $(20_1, 20_2, ...)$ so steuert, dass beim Übergang eines Förderguts $(10_1, 10_2, ... ,10_M)$ vom Zuförderer (1) auf das erste Förderband $(22_1)$ der Kaskade die Geschwindigkeit von Zuförderer (1) und erstem Förderband $(22_1)$ gleich ist;

c) für den Eintritt eines Fördergutes $(10_1, 10_2, ... ,10_M)$ auf das erste Förderband $(22_1)$ ein Sensor $(24_1)$ zur Erfassung der Position der Hinterkante (11) des betreffenden Förderguts $(10_1, 10_2, ... , 10_M)$ angeordnet und mit der Steuerung verbunden ist, um das Verlassen des betreffenden Fördergutes $(10_1, 10_2, ... , 10_M)$ vom Zuförderer (1) zu erfassen;

d) die Steuerung den Antrieb $(20_1, 20_2, ...)$ des das Fördergut $(10_1, 10_2, ... , 10_M)$ tragenden Förderbandes $(22_1, 22_2, ... , 22_N)$ so steuert, dass unter Einhaltung von Haftreibungsbedingungen zwischen Förderband $(22_1, 22_2, ...)$ und darauf befindlichem Fördergut $(10_1, 10_2, ... ,10_M)$ das betreffende Fördergut $(10_1, 10_2, ... ,10_M)$ beschleunigt ($\pm$) wird;

e) die Steuerung den Antrieb $(20_{1N+1})$ des nachfolgenden Förderbands $(22_{N+1})$ mit der gleichen Geschwindigkeit wie jener des kommenden Förderguts $(10_1, 10_2, ... ,10_M)$ auf dem vorangehenden Förderband $(22_1, 22_2, ...)$ zur Übernahme eines Förderguts $(10_1, 10_2, ... ,10_M)$ ansteuert;

f) die Steuerung die in d) und f) angegebenen Aktionen wiederholt, bis das betreffende Fördergut $(10_1, 10_2, ... , 10_M)$ die Kaskade der in Förderrichtung (r) aufeinanderfolgenden Förderbänder $(22_1, 22_2, ... , 22_N)$ durchlaufen hat und sich auf dem Wegförderer (2) befindet.

Die vorliegende Erfindung zur Beschleunigung eines Güterstroms hat folgende Vorteile:

i) Die Einhaltung von Haftreibungsbedingungen zwischen Förderband und darauf befindlichen Fördergütern ermöglicht unter der Voraussetzung, dass die Fördergüter eine maximale festgelegte Länge nicht überschreiten, einen einfachen Aufbau einer zugehörigen Steuerung. Da die Steuerung über die Antriebe und das Bewegungsprofil der einzelnen Förderbänder eine volle Kontrolle hat, gilt dies wegen der Haftreibung auch für die auf den auf den Förderbändern beschleunigten Fördergüter. Sensoren die den Verlauf der einzelnen Fördergüter erfassen und der Steuerung als Eingangsdaten zugeführt werden, sind nicht erforderlich. Die vorstehend erwähnte Einschränkung ist begründet durch die Länge des ersten Förderbandes. Die Länge - vorgenannt maximale feste Länge - des ersten Förderbandes ist dabei bestimmt durch den Mindestabstand zweier ankommender Fördergüter.

ii) Der vorstehend genannte Vorteil einer «fixen» Verbindung (dank des Kraftschlusses) zwischen Förderband und dem darauf befindlichen Fördergut ermöglicht, dass nur der Eintritt eines Fördergutes in die Vorrichtung mit der Kaskade von Förderbändern erfasst werden muss, der weitere Verlauf der Fördergüter innerhalb der Vorrichtung ist aus dem Bewegungsprofil der Förderbänder direkt ableitbar.

iii) Aus dem unter ii) genannten Vorteil ergibt sich direkt, dass die Erfassung der Hinterkante eines Fördergutes bei Eintritt in die Vorrichtung mit einem Sensor - vorzugsweise einer Lichtschranke - genügt für die Ansteuerung der Förderbänder. Damit ist auch offensichtlich, dass es genügt, die Steuerung als sogenannte Speicherprogrammierbare Steuerung SPS auszuführen. Nebst der vorerwähnten Lichtschranke können in besonderen Anwendungen auch andere Leser, zB ein RFID-Leser oder ein Kamerasystem eingesetzt werden. Zusätzlich kann mit dem gleichen Sensor auch die Vorderkante eines Fördergutes erfasst werden, um weitere Parameter für die Steuerung zur Verfügung zu haben.

Vorteilhafte Ausführungsformen sind in den abhängigen Ansprüchen angegeben wie beispielsweise:

A) Im praktischen Betrieb kann die Einhaltung von Haftreibungsbedingungen wegen auftretender Verschmutzungen, wie zB ein Ölfleck auf einem Förderband, nicht immer eingehalten werden. Dazu wird vorgeschlagen, zusätzlich für jedes Förderband an dessen Ende einen Sensor zur Erfassung der Hinterkante eines Fördergutes vorzusehen. Diese erfasste Position wird ebenfalls der Steuerung zugeführt und durch einen Vergleich zwischen der Ist-Position des Fördergutes mit der gemäss Haftreibungsbedingungen auf dem Förderband vorgegebenen Sollposition kann für den Antrieb der nachfolgenden Förderbänder eine Korrektur vorgesehen werden (Anspruch 10).

B) Bereiche auf einem Flughafengelände können Längen von mehreren Kilometern annehmen. Dazu werden vorteilhafterweise die Geschwindigkeiten für den Transport von Gepäckstücken in diesen Bereichen erhöht um diese Strecken in kürzerer Zeit zu durchfahren. Für diesen Vorgang wird die erfindungsgemässe Vorrichtung mit Zuförderer, Beschleunigungsstrecke und Wegförderer eingesetzt. Dazu werden vorteilhafterweise die Geschwindigkeiten von Zuförderer und vom Wegförderer erfasst und der Steuerung zugeführt, um den Beschleunigungsvorgang in der Vorrichtung an eventuelle Änderungen dieser Geschwindigkeiten anzupassen (Anspruch 9).

C) Durch die Sensorik «Erfassung Position eines Fördergutes» und «Erfassung der Geschwindigkeit von Zuförderer und von Wegförderer» genügt es, für das Verfahren und die Vorrichtung eine Speicherprogrammierbare Steuerung SPS vorzusehen. Eine kompliziertere spezifische Hardware mit entsprechender Software ist nicht erforderlich.

Die Erfindung wird nachfolgend anhand der Figuren beispielsweise näher erläutert. Dabei zeigen:

FIG 1    Prinzipdarstellung mit dem Eingang/Ausgang einer Vorrichtung zur Beschleunigung eines Güterstroms;

FIG 2    Aufbau einer Vorrichtung zur Beschleunigung eines Güterstroms;

FIG 3a   Geschwindigkeits- und Wegdiagramm bei Eintritt eines Fördergutes in eine Kaskade von in Förderrichtung aufeinanderfolgenden Förderbändern;

FIG 3b   Geschwindigkeits- und Wegdiagramm beim Übergang eines Fördergutes von einem Förderband zum nächstfolgenden Förderband innerhalb der Kaskade;

FIG 4    Geschwindigkeits- und Wegdiagramm bei verschieden langen Fördergütern innerhalb der Kaskade.

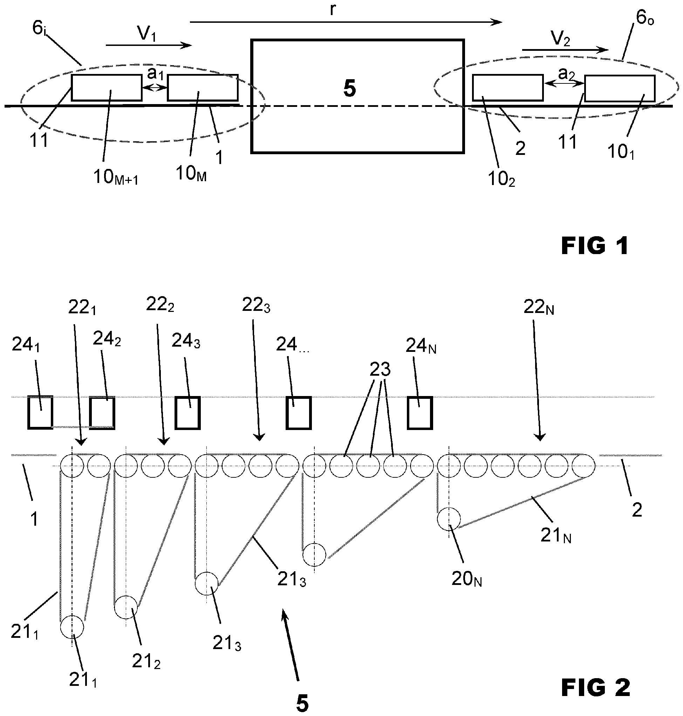

Figur 1 zeigt eine Prinzipdarstellung einer Vorrichtung 5 zur Beschleunigung eines Güterstroms 6. Die Fördergüter 10, $10_1$, $10_2$, ... ,$10_M$, $10_{M+1}$, werden mit einem Zuförderer 1 in der Förderrichtung r an die Vorrichtung 5 herangeführt → eingehender Güterstrom $6_i$. Der Zuförderer 1 ist als Band mit einer konstanten Geschwindigkeit $v_1$ betrieben. Nach der erfolgten Beschleunigung dieses Güterstroms 6 in der Vorrichtung 5 werden die einzelnen Fördergüter 10, $10_1$, $10_2$, ... ,$10_M$, $10_{M+1}$, ... auf einem Wegförderer 2 mit der Geschwindigkeit $v_2$ wegtransportiert. Die Vorrichtung 5 hat im eingeschwungenen Zustand den gleichen Durchsatz $\lambda$ wie vor und nach der Vorrichtung 5. Eine Pufferung kann insofern stattfinden, dass dynamisch (also immer mit bewegten Gütern) der Strom der Güter so weit verlangsamt wird, dass vor dem ersten Gut dieser verlangsamten Sequenz eine große Lücke zum bereits aus der Vorrichtung gefahrenen letzten Gut erzeugt wird. Theoretisch kann die Sequenz so weit verlangsamt werden, bis die Lücke nahezu "Null" ist. Damit müssen die verwendeten Fördererlängen also deutlich kürzer als das kürzeste Gut werden. Der Durchsatz $\lambda$ ist definiert als Anzahl Fördergüter/Zeiteinheit. Somit wird der (mittlere) Abstand a zwischen den Fördergütern $10_1$, $10_2$, ... beim

Austritt wie folgt verändert:

i) Der mittlere Abstand a zwischen zwei Fördergütern beim Austritt wird bei einer positiven Beschleunigung (+) vergrössert:
$a_2 > a_1$ bei $v_1 < v_2$.
ii) Der mittlere Abstand a zwischen zwei Fördergütern beim Austritt wird bei einer negativen Beschleunigung (-), also bei einer Verzögerung verkleinert:
$a_2 < a_1$ bei $v_1 < v_2$.

Die vorstehende Beziehung bzw Abhängigkeit aus der Fördergeschwindigkeit $v_1$, $v_2$ ergibt sich nach Auflösung nach dem Abstand a direkt aus der Formel für den Durchsatz $\lambda$:

$$\lambda = \frac{v}{l + a}$$

$$a = \frac{v}{\lambda} - 1$$

Die Summe l+a heisst Teilung, in en «pitch». Die vorstehenden Formeln beruhen auf den Quellen [4] und [5].
Noch einmal zur Verdeutlichung: Im Sinne dieser Schrift ist der Begriff «Beschleunigung» vorzeichenbehaftet, siehe dazu die Erläuterungen im Absatz [0002] dieser Schrift. Zu den weiteren Ausführungen wird an dieser Stelle auf die Hinterkante 11 eines Förderguts 10 hingewiesen, der Begriff «Hinter»kante bezieht sich auf die Förderrichtung r eines Fördergutes 10.
Figur 2 zeigt eine Prinzipdarstellung einer Vorrichtung 5 zur Beschleunigung eines Güterstroms 6, dieser Abschnitt wird auch Beschleunigungsstrecke genannt. Die Vorrichtung 5 weist eine Kaskade von in Förderrichtung r aufeinanderfolgenden Förderbändern $22_1$, $22_2$, ... auf, die je einen eigenen, individuell steuerbaren Antrieb $20_1$, $20_2$, ... aufweisen. Die Ansteuerung der Antriebe erfolgt durch eine in dieser Schrift nicht weiter spezifizierte Steuerung SPS [6], da eine solche Steuerung sowohl zum Stand der Technik gehört, sehr verbreitet eingesetzt ist und somit allgemeines Fachwissen des Fachmanns bildet. Der Begriff Fördergüter $10_1$, $10_2$, ... ,$10_M$, $10_{M+1}$ wird weitgefasst: Unter diesen Begriff fallen auch Tray's - in de «Ablagefach», «Wanne» - die zB mit einem Gepäckstück beladen sein können. Zur Ausgestaltung der Fördergüter $10_1$, $10_2$, ... , $10_M$, $10_{M+1}$ brauchen auch keine topologischen Anforderungen definiert zu werden. Wichtig für die vorliegende Erfindung ist, dass diese Fördergüter $10_1$, $10_2$, ... ,$10_M$, $10_{M+1}$ direkt auf einem Förderband 22 der Vorrichtung 5 oder indirekt auf einem Tray stets einer Beschleunigung ($\pm$) unter Haftreibungsbedingungen [3] unterzogen werden können. Haftreibungsbedingungen: Die Fördergüter 10 verrutschen nicht bei Beschleunigungsvorgängen auf einem der Förderbänder $22_1$, $22_2$, .... Im Folgenden sind mit Fördergut sowohl das Fördergut 10 selber als auch ein Fördergut 10 auf einem Tray subsummiert. Ein Fördergut 10 ist dank eines Kraftschlusses (ergibt sich aus dem Begriff Haftreibung) mit dem Band «verbunden».

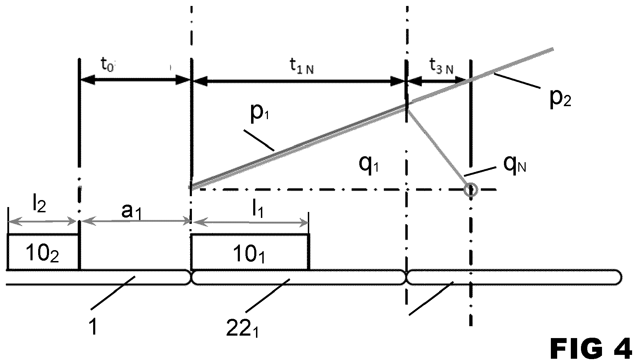

Die FIG 2 zeigt ein Ausführungsbeispiel der vorliegenden Erfindung für den Fall einer positiven (+) Beschleunigung. Die Länge der kaskadierten Förderbänder $22_1$, $22_2$, ... nimmt stetig zu. Die Länge des ersten Förderbandes $22_1$ ist dabei bestimmt durch den Mindestabstand $a_1$ zweier ankommender Fördergüter 22, die Länge l eines Fördergutes 22 ist hier irrelevant wie später anhand der FIG 4 noch erläutert werden wird.

Ohne eine figürliche Darstellung hier anzugeben, ist bei einer negativen Beschleunigung (-), das heisst einer Verlangsamung des Güterstroms 6, die Länge l der kaskadierten Förderbänder $22_1$, $22_2$, ... stetig abnehmend. Die Länge l des ersten Förderbandes $22_1$ ist somit grösser als vorstehend beim Fall einer positiven (+) Beschleunigung. Dies ergibt sich direkt aus der vorstehend angegebenen Formel für den Abstand a zwischen den einzelnen Fördergütern $10_1$, $10_2$, ... unter der Voraussetzung eines konstanten Durchsatzes λ.

Zurück nun zur FIG 2: Die Bänder $21_1$, $21_2$, ... der Förderer $22_1$, $22_2$, ... werden je individuell von einem von einem Motor angetrieben Antriebsrad 20 angetrieben. Dazu ist die hier nicht weiter beschriebene Steuerung erforderlich. Der Güterstrom 6 auf dem Zuförderer 1 hat eine konstante Geschwindigkeit $v_1$; die einzelnen Fördergüter $10_1$, $10_2$, ... brauchen nicht äquidistant angeordnet zu sein. Es muss nur eine Bedingung erfüllt sein: Die einzelnen Fördergüter $10_1$, $10_2$, ... dürfen den vorgenannten Mindestabstand $a_1$ nicht unterschreiten. Diese Bedingung ist unabhängig vom Vorzeichen der Beschleunigung. In der FIG 2 ist unmittelbar vor jedem Förderer $22_1$, $22_2$, ... ein zugehöriger Sensor $24_1$, $24_2$, ... angeordnet, der die Hinterkante 11 eines Fördergutes 10 erfasst, wenn dieses Fördergut den betreffende Förderer verlässt. Dieses Erfassen der Hinterkante bei Eintritt eines Fördergutes $10_M$ auf das erste Förderband $22_1$ wird der Steuerung zugeführt, um den Motor des ersten Antriebsrades $20_1$ zu beschleunigen (±). Die vorgenannte Lichtschranke 24 kann ebenso auch die Vorderkannte erfassen. Dadurch kann die Steuerung die Laufzeit eines Fördergutes bestimmen. Die an dieser Stelle bekannte Eintrittsgeschwindigkeit vom Zuförderer 1 - bekannt sei es durch Parametrierung in der Steuerung, sei es via einen Drehzahlgeber des Zuförderers 1 erlaubt die Länge l eines Fördergutes 10 wie auch den Abstand a bzw. die Lücke a zwischen zwei Fördergütern $10_N$, $10_{N+1}$

In der Steuerung sind die Eintrittsgeschwindigkeit $v_2$ und die Austrittsgeschwindigkeit $v_2$ von Zuförderer 1 und Wegförderer 2 parametrisiert wie auch die Längen l der einzelnen kaskadierten Förderbänder $22_1$, $22_2$, .... Mit der Voraussetzung einer permanenten Haftreibung zwischen Fördergut 10 und Förderband 22 ist zusammen mit der erfassten Hinterkante 11 eines Fördergutes 10 beim Verlassen des Zuförderers 1 in der Steuerung die Lage eines jeden Fördergutes 10 «bekannt» und dementsprechend laufen die weiteren Beschleunigungen auf den weiteren Förderbänder $22_2$, $22_3$, ... automatisch, dh ohne weitere Sensorik ab. Wichtig ist beim Übergang eines Fördergutes 10 von einem Förderband zum nächsten Förderband - also stromabwärts - , dass die beiden involvierten Förderbänder für diesen Übergang die gleiche Geschwindigkeit aufweisen, um das Erfordernis einer permanent wirksamen Haftreibung zu erfüllen. Die weiteren in FIG 2 angegebenen Sensoren $24_2$, $24_3$, ... sind für die weiteren Förderbänder $22_2$, $22_3$, ... nicht erforderlich, sondern für den Fall vorgesehen wo die Fördergüter 10 eine individuelle Länge l aufweisen. Die Voraussetzung eines Nichtunterschreitens eines Minimalabstandes $a_1$ muss dabei aufrecht erhalten bleiben.

Die Sensoren $24_1$, $24_2$, ... sind vorzugsweise als Lichtschranken ausgebildet. Durch das Passieren einer Lichtschranke 24 entsteht ein Rechtecksignal, das sehr einfach über die Zeit t ausgewertet werden kann. Dabei wird nicht nur die Hinterkante 11 eines Fördergutes 10 erfasst, sondern es kann über das von einer Steuerung empfangene Rechtecksignal auch die Länge eines Fördergutes 10 erfasst werden. Das Auswerten der Rechtecksignale über die einzelnen Förderbänder $22_1$, $22_2$, ... hat den weiteren Vorteil, dass so Latenzzeiten der Steuerung korrigiert werden können. Diese Latenzzeiten sind typischerweise in der Grössenordnung von 10ms bis 20ms

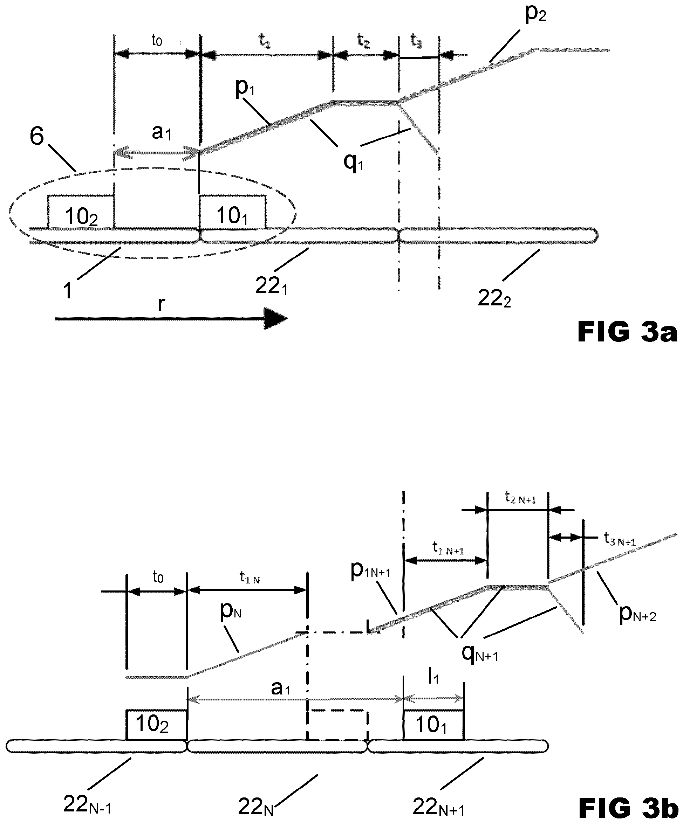

Zu den Darstellungen in den FIG 3a, 3b und 4 sind folgende einführende Erläuterungen erforderlich:

i) In diesen FIG 3a, 3b und 4 ist das Bewegungsprofil p eines Fördergutes $10_M$ stets bezüglich der Förderguthinterkante $11_M$ des betreffenden Fördergutes $10_M$ angegeben. Statt von Bewegungsprofil p kann ebenso gut auch von Geschwindigkeit $v_M$ des betreffenden Fördergutes $10_M$ gesprochen werden. Auf der Abszisse ist der jeweilige Ort der Förderguthinterkante $11_M$ des betreffenden Fördergutes $10_M$ angegeben. Die graphische Darstellung scheint linear zu sein. Dieser «Linearität» liegt jedoch mit eine invers quadratische Skala auf Ordinate zugrunde.
ii) Ähnlich liegt der Sachverhalt vor beim Fahrprofil q eines Förderbandes 22 vor, da die Abszisse nicht die Zeitachse, sondern den Ort (Weg) des betreffenden Förderguts $10_M$ beinhaltet.
iii) Unbeachtlich der vorstehenden Erläuterungen sind in den FIG 3a, 3b und 4 die betreffenden Zeiten $t_i$ zwischen den einzelnen Förderbändern $22_1$, $22_2$, ... überlagert.

In der FIG 3a ist das Geschwindigkeits- und Wegdiagramm eines Fördergutes $10_1$ bei Eintritt in die Vorrichtung 5 gezeigt, genau bei Eintritt in eine Kaskade von in Förderrichtung aufeinanderfolgenden Förderbändern $22_1$, $22_2$ : Das Bewegungsprofil p bzw die Geschwindigkeit des Fördergutes $10_1$ bezieht sich auf die Hinterkante $11_1$ des betreffenden Fördergutes $10_1$. Be-

zogen auf das Förderband $22_1$ ist die Geschwindigkeit gegen Ende des Förderbandes $22_1$ konstant, da in diesem Bereich der Übergang des Fördergutes vom Förderband $22_1$ auf das nachfolgende Förderband $22_2$ erfolgt. Da stets Haftreibungsbedingungen einzuhalten sind, laufen in diesem Bereich die Förderbänder $22_1$ und $22_2$ gleich schnell. Wenn die Hinterkante $11_1$ des betreffenden Fördergutes $10_1$ das Förderband $22_1$ verlassen hat, wird dieses Förderband $22_1$ auf die Geschwindigkeit gebracht, die der Geschwindigkeit des Zuförderers 1 entspricht, dies ist mit dem Verlauf $q_1$ in der FIG 3a dargestellt. Vorliegend ist in der FIG 3a der Fall einer positiven Beschleunigung (+) gezeigt, demzufolge wird nach dem Verlassen des Förderbandes $22_1$ dieses Förderband auf die Geschwindigkeit des Zuförderers 1 abgebremst.

In der FIG 3b ist das Geschwindigkeits- und Wegdiagramm eines Fördergutes $10_1$ beim Übergang von einem Förderband $22_N$ zum nachfolgenden Förderband $22_{N+1}$ dargestellt. Zusätzlich ist mit $p_{2N}$ der Geschwindigkeitsverlauf bzw das Bewegungsprofil des Fördergutes $10_2$ beim Übergang vom Zuförderer 1 auf das erste Förderband $22_N$ dargestellt, hier ist eine allgemeinere Notation N statt 1 angewendet. Wie vorstehend zu FIG 3a erläutert wird, wenn die Hinterkante $11_1$ des betreffenden Fördergutes $10_1$ das Förderband $22_{N+1}$ verlassen hat, wird dieses Förderband $22_{N+1}$ auf die Geschwindigkeit gebracht, die der Geschwindigkeit des vorangehenden Förderers $22_N$ entspricht, dies ist in der FIG 3b mit dem Verlauf $q_{N+1}$ dargestellt der Förderer $22_{N+1}$ auf die Geschwindigkeit

In FIG 4 sind die Geschwindigkeits- und Wegdiagramme von verschieden langen Fördergütern $10_1$, $10_2$ gezeigt. Diese Fördergüter $10_1$, $10_2$ weisen je die Länge $l_1$ bzw $l_2$ auf. Der Abstand zwischen den Fördergütern $10_1$, $10_2$ ist mit $a_1$ bezeichnet. Wie vorstehend bei der Formel für den Durchsatz erläutert, ist die Teilung - auch als «pitch» bezeichnet - konstant. Vorliegend beträgt die Teilung $l_1 + a_1$. Auch der FIG 4 ist eine positive Beschleunigung zugrunde gelegt, somit wird nach dem das Fördergut $10_1$ das erste Förderband $22_1$ verlassen hat, dieses Förderband auf die Geschwindigkeit des Zuförderers 1 abgebremst. Dies ist in FIG 4 mit dem Fahrprofil $q_1$ dargestellt. Das Fahrprofil q kann auch als Geschwindigkeitsverlauf bezeichnet werden. Bezogen auf das Fördergut $10_1$ ist in der FIG 4 das Bewegungsprofil $p_1$ auf dem Förderband $22_1$ und das Bewegungsprofil $p_2$ auf dem Förderband $22_2$ dargestellt. Bezüglich der Angaben in den FIG 3a, 3b und 4 wird nochmals an die einleitenden Erläuterungen im Absatz [0031] erinnert.

**Bezugszeichenliste; Glossar**

1 Zuförderer, Zuführförderer

2 Wegförderer

5 Vorrichtung zur Beschleunigung eines Güterstroms

6 Gutstrom, Güterstrom

$6_i$ eingehender Güterstrom

$6_o$ ausgehender Güterstrom

10, $10_1$, $10_2$, ... ,$10_M$, $10_{M+1}$, $10_{M+2}$ Gut, Fördergut, Förderobjekt

11, $11_1$, $11_2$, ... , $11_M$ Förderguthinterkante, Guthinterkante,

20, $20_1$, $20_2$, ... Antrieb, Antriebsrad mit Motor

21, $21_1$, $21_2$, ... , $21_N$ Band

22, $22_1$, $22_2$, ... , $22_N$ Förderer der Beschleunigungsstrecke, als «Förderband» bezeichnet

23 Rolle, Bandrolle

24, $24_1$, $24_2$, ... , $24_N$ Sensor, Lichtschranke vor dem entsprechenden Förderband 22

a Abstand zwischen zwei Förderobjekten

$a_1$ Abstand zwischen zwei Förderobjekten 10 bei Eintritt

$a_2$ Abstand zwischen zwei Förderobjekten 10 bei Austritt

l Länge eines Förderguts

V Geschwindigkeit

λ Durchsatz

M Laufende Variable bzw Index für die Bezeichnung eines Fördergutes

N Laufende Variable bzw Index der Förderbänder 22

l Länge eines Fördergutes 10 in Förderrichtung r

p Bewegungsprofil eines Fördergutes 10 auf einem Förderband 22

PLC programmable logic controller, in deutsch: Speicherprgrammierbare Steuerung SPS

q Fahrprofil eines Förderbandes 22

r Förderrichtung

RFID radio-frequency identification

SPS Speicherprogrammierbare Steuerung

t Zeit

$v_1$ Geschwindigkeit eines Förderguts bei Eintritt in die Vorrichtung 5

$v_2$ Geschwindigkeit eines Förderguts bei Austritt aus der Vorrichtung 5

$\pm$ vorzeichenbehafte Beschleunigung: - Verlangsamen + Schneller werden

**Literaturliste, Quellen**

[1] WO 2022/002510 A1 «VERFAHREN UND FORDERSYSTEM ZUM MANIPULIEREN VON STÜCKGÜTERN AUF EINER FORDERSTRECKE» Anmelderin: SIEMENS AKTIENGESELLSCHAFT
[2] https://de.wikipedia.org/wiki/Beschleunigung
[3] https://de.wikipedia.org/wiki/Haftreibung
[4] https://de.wikipedia.org/wiki/Durchsatz
[5] https://collab.dvb.bayern/display/TUMlogistik kompendium/Durchsatz
[6] https://de.wikipedia.org/wiki/Speicherprogram mierbare Steuerung

**Patentansprüche**

1. Verfahren zur Beschleunigung ($\pm$) eines Güterstroms ($6_i$), der gebildet wird von auf einem Zuförderer (1) herangeführten Fördergütern ($10_1$, $10_2$, ... ,$10_M$) in einer Förderrichtung (r) zu einer Vorrichtung (5), wobei in der Förderrichtung (r) an die Vorrichtung (5) ein Wegförderer (2) zur Weiterbeförderung des beschleunigten Güterstroms ($6_o$) angeschlossen ist und diese Vorrichtung (5) umfasst:
eine Kaskade von in Förderrichtung (r) aufeinanderfolgenden Förderbändern ($22_1$, $22_2$, ...), die je ein umlaufendes Band (21) und je einen eigenen, individuell steuerbaren Antrieb ($20_1$, $20_2$, ...) aufweisen;
bei welchem Verfahren folgende Schritte ausgeführt werden:

    a) Fördern eines Förderguts ($10_1$, $10_2$, ... ,$10_M$) auf dem Zuförderer (1) hin zum stromabwärts ersten anzutreffenden Förderband ($22_1$) der Vorrichtung (5) und Antreiben dieses ersten Förderbandes ($22_1$) mit der gleichen Geschwindigkeit wie der Geschwindigkeit des Zuförderers (1);

    b) erfassen der Position der Hinterkante (11) des Förderguts ($10_1$, $10_2$, ... ,$10_M$) wenn das Fördergut ($10_1$, $10_2$, ... ,$10_M$) den Zuförderer (1) verlässt;
    c) beschleunigen ($\pm$) des das Fördergut ($10_1$, $10_2$, ... ,$10_M$) tragenden Förderbands ($22_1$, $22_2$, ... , $22_N$) unter Einhaltung von Haftreibungsbedingungen zwischen Förderband ($22_1$, $22_2$, ...) und darauf befindlichem Fördergut ($10_1$, $10_2$, ... ,$10_M$);
    d) antreiben des nachfolgenden Förderbands ($22_1$, $22_2$, ...) mit der gleichen Geschwindigkeit wie jener des kommenden Förderguts ($10_1$, $10_2$, ... ,$10_M$) auf dem vorangehenden Förderband ($22_1$, $22_2$, ...) zur Übernahme eines Förderguts ($10_1$, $10_2$, ... ,$10_M$);
    e) Wiederholung der Verfahrensschritte c) und d) bis das betreffende Fördergut ($10_1$, $10_2$, ... ,$10_M$) die Kaskade der in Förderrichtung (r) aufeinanderfolgenden Förderbänder ($22_1$, $22_2$, ... , $22_N$) durchlaufen hat und sich auf dem Wegförderer (2) befindet.

2. Verfahren nach Anspruch 1,
**dadurch gekennzeichnet, dass**
im Verfahrensschritt d) das vorangehende Förderband ($22_{N+1}$) entgegen der Beschleunigung im Verfahrensschritt c) invers beschleunigt wird bis zum Erreichen der Geschwindigkeit des dem vorangehenden Förderband ($22_{N+1}$) vorangehenden Förderbandes ($22_N$), wenn das Fördergut ($10_1$, $10_2$, ... ,$10_M$) das vorangehende Förderband ($22_{N+1}$) verlassen hat.

3. Verfahren nach einem der Ansprüche 1 bis 2,
**dadurch gekennzeichnet, dass**
nach dem Verfahrensschritt d) die Position der Hinterkante (11) des Förderguts ($10_1$, $10_2$, ... ,$10_M$) erfasst wird, wenn sich das Fördergut ($10_1$, $10_2$, ... ,$10_M$) vollständig auf dem nachfolgenden Förderband ($22_1$, $22_2$, ... , $22_N$) befindet.

4. Verfahren nach einem der Ansprüche 1 bis 3,
**dadurch gekennzeichnet, dass**
das Erfassen der Position der Hinterkante (11) des Förderguts ($10_1$, $10_2$, ... ,$10_M$) mit einem Sensor (24, $24_1$, $24_2$, ... , $24_N$) erfolgt.

5. Verfahren nach einem der Ansprüche 1 bis 4,
**dadurch gekennzeichnet, dass**
im Verfahrensschritt c) das Förderband ($22_1$, $22_2$, ... , $22_N$) positiv beschleunigt wird.

6. Verfahren nach einem der Ansprüche 1 bis 4,
**dadurch gekennzeichnet, dass**
im Verfahrensschritt c) das Förderband ($22_1$, $22_2$, ... , $22_N$) negativ beschleunigt wird.

7. Verfahren nach Anspruch 5, **dadurch gekennzeichnet, dass** die Länge der Förderbänder ($22_1$, $22_2$, ... , $22_N$) in Förderrichtung (r) stufenweise grösser ausgebildet ist.

8. Verfahren nach Anspruch 6, **dadurch gekennzeichnet, dass** die Länge der Förderbänder ($22_1$, $22_2$, ... , $22_N$) in Förderrichtung (r) stufenweise kleiner ausgebildet ist.

9. Verfahren nach einem der Ansprüche 1 bis 8 **gekennzeichnet durch** Erfassen der Geschwindigkeiten von Zuförderer (1) und Wegförderer (2), um im Verfahrensschritt a) und d) für die Übergabe eines Förderguts ($10_1$, $10_2$, ... ,$10_M$) die je gleiche Geschwindigkeit des ersten Förderbandes ($22_1$) bzw letzten Förderbandes ($22_N$) der Kaskade zu erlangen.

10. Verfahren nach einem der Ansprüche 4 bis 9 **dadurch gekennzeichnet, dass** am Ende eines jeden Förderbandes ($22_1$, $22_2$, ... , $22_N$) Position von Hinterkante (11) und von Vorderkante des Förderguts ($10_1$, $10_2$, ... ,$10_M$) mit einem Sensor (24, $24_1$, $24_2$, ... , $24_N$) erfolgt, um den Beschleunigungsvorgang innerhalb der Vorrichtung (5) zu überwachen.

11. Vorrichtung (5) zur Beschleunigung ($\pm$) eines Güterstroms (6) enthaltend eine Mehrzahl von Fördergütern ($10_1$, $10_2$, ... ,$10_M$) bei der ein Zuförderer (1) für die Zuführung der Fördergüter ($10_1$, $10_2$, ... ,$10_M$) und ein Wegförderer (2) für einen Weitertransport der Fördergüter ($10_1$, $10_2$, ... ,$10_M$) angeschlossen ist, **dadurch gekennzeichnet, dass**

a) die Vorrichtung (5) eine Kaskade von in Förderrichtung (r) aufeinanderfolgenden Förderbändern ($22_1$, $22_2$, ...) enthält, die je ein umlaufendes Band ($21_1$, $21_2$, ... , $21_N$) und je einen eigenen, individuell über eine Steuerung steuerbaren Antrieb ($20_1$, $20_2$, ...) aufweisen, um die Fördergüter (101, 102, ... ,10M) sukzessive auf den Förderbändern ($22_1$, $22_2$, ...) unter Haftreibungsbedingungen zwischen Fördergut (10) und Förderband (22) zu beschleunigen ($\pm$);
b) die Steuerung die Antriebe ($20_1$, $20_2$, ...) so steuert, dass beim Übergang eines Förderguts ($10_1$, $10_2$, ... ,$10_M$) vom Zuförderer (1) auf das erste Förderband ($22_1$) der Kaskade die Geschwindigkeit von Zuförderer (1) und erstem Förderband ($22_1$) gleich ist;
c) für den Eintritt eines Fördergutes ($10_1$, $10_2$, ... ,$10_M$) auf das erste Förderband ($22_1$) ein Sensor ($24_1$) zur Erfassung der Position der Hinterkante (11) des betreffenden Förderguts ($10_1$, $10_2$, ... ,$10_M$) angeordnet und mit der Steuerung verbunden ist, um das Verlassen des betreffenden Fördergutes ($10_1$, $10_2$, ... ,$10_M$) vom Zuförderer (1) zu erfassen;
d) die Steuerung den Antrieb ($20_1$, $20_2$, ...) des das Fördergut ($10_1$, $10_2$, ... ,$10_M$) tragenden Förderbandes ($22_1$, $22_2$, ... , $22_N$) so steuert, dass unter Einhaltung von Haftreibungsbedingungen zwischen Förderband ($22_1$, $22_2$, ...) und darauf befindlichem Fördergut ($10_1$, $10_2$, ... ,$10_M$) das betreffende Fördergut ($10_1$, $10_2$, ... ,$10_M$) beschleunigt ($\pm$) wird;
e) die Steuerung den Antrieb ($20_{1N+1}$) des nachfolgenden Förderbands ($22_{N+1}$,) mit der gleichen Geschwindigkeit wie jener des kommenden Förderguts ($10_1$, $10_2$, ... ,$10_M$) auf dem vorangehenden Förderband ($22_1$, $22_2$, ...) zur Übernahme eines Förderguts ($10_1$, $10_2$, ... ,$10_M$) ansteuert;
f) die Steuerung die in d) und e) angegebenen Aktionen wiederholt, bis das betreffende Fördergut ($10_1$, $10_2$, ... ,$10_M$) die Kaskade der in Förderrichtung (r) aufeinanderfolgenden Förderbänder ($22_1$, $22_2$, ... , $22_N$) durchlaufen hat und sich auf dem Wegförderer (2) befindet.

12. Vorrichtung (5) nach Anspruch 11, **dadurch gekennzeichnet, dass** an jedem Ende eines Förderbandes ($22_1$, $22_2$, ...) ein Sensor ($24_1$, $24_2$, ...) angeordnet und je mit der Steuerung verbunden ist, um das Verlassen des betreffenden Fördergutes ($10_1$, $10_2$, ... ,$10_M$) vom jeweiligen Förderband ($22_1$, $22_2$, ...) zu erfassen.

13. Vorrichtung (5) nach Anspruch 12, **dadurch gekennzeichnet, dass** nach dem Verlassen eines Fördergutes ($10_1$, $10_2$, ... ,$10_M$) von einem Förderband ($22_1$, $22_2$, ...) die Steuerung den Antrieb ($20_1$, $20_2$, ...) dieses Förderbands ($22_1$, $22_2$, ...) so ansteuert, dass es entgegen der Beschleunigung des Förderguts ($10_1$, $10_2$, ... ,$10_M$) invers beschleunigt wird bis zum Erreichen der Geschwindigkeit des vorangehenden Förderbandes ($22_1$, $22_2$, ...) .

14. Vorrichtung (5) nach einem der Ansprüche 11 bis 13, **dadurch gekennzeichnet, dass** die Steuerung den Güterstrom (6) über die Förderbänder positiv (+) beschleunigt und die Länge der Förderbänder ($22_1$, $22_2$, ... , $22_N$) in Förderrichtung (r) stufenweise grösser ausgebildet ist.

15. Vorrichtung (5) nach einem der Ansprüche 11 bis 13, **dadurch gekennzeichnet, dass** die Steuerung den Güterstrom (6) über die Förderbänder negativ (-) beschleunigt und die Länge der Förderbänder ($22_1$, $22_2$, ... , $22_N$) in Förderrichtung (r) stufenweise kleiner ausgebildet ist.

**FIG 1**

**FIG 2**

FIG 3a

FIG 3b

FIG 4

Europäisches
Patentamt
European
Patent Office
Office européen
des brevets

## EUROPÄISCHER RECHERCHENBERICHT

Nummer der Anmeldung

EP 24 21 1773

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br>A | JP H09 188414 A (CANON KK)<br>22. Juli 1997 (1997-07-22)<br>* Zusammenfassung; Abbildungen 1-7 *<br>----- | 1-6,<br>10-14<br>7-9,15 | INV.<br>B65G43/08<br>B65G43/10<br>B65G47/31 |
| A | WO 2018/142180 A1 (GRUPO BIMBO SAB DE CV [MX]) 9. August 2018 (2018-08-09)<br>* Seiten 1-26; Abbildungen 1-6 *<br>----- | 1 | |
| A | EP 3 947 215 B1 (TGW MECHANICS GMBH [AT]) 9. November 2022 (2022-11-09)<br>* Seiten 1-17; Abbildungen 1-12 *<br>----- | 1 | |
| A | US 6 244 421 B1 (HALL DAVID V [US])<br>12. Juni 2001 (2001-06-12)<br>* Spalten 1-8; Abbildungen 1-4 *<br>----- | 1 | |
| A | EP 3 072 835 A1 (DAIFUKU KK [JP])<br>28. September 2016 (2016-09-28)<br>* Seiten 1-14; Abbildungen 1-6 *<br>----- | 7,8,15 | |
| | | | RECHERCHIERTE SACHGEBIETE (IPC)<br><br>B65G |

Der vorliegende Recherchenbericht wurde für alle Patentansprüche erstellt

| Recherchenort | Abschlußdatum der Recherche | Prüfer |
|---|---|---|
| Den Haag | 10. März 2025 | Martin, Benoit |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes
Dokument

EPO FORM 1503 03.82 (P04C03)

**EP 4 741 321 A1**

**ANHANG ZUM EUROPÄISCHEN RECHERCHENBERICHT**
**ÜBER DIE EUROPÄISCHE PATENTANMELDUNG NR.**                EP 24 21 1773

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-03-2025

| Im Recherchenbericht angeführtes Patentdokument | Datum der Veröffentlichung | Mitglied(er) der Patentfamilie | Datum der Veröffentlichung |
|---|---|---|---|
| JP H09188414 A | 22-07-1997 | KEINE | |
| WO 2018142180 A1 | 09-08-2018 | EP 3577044 A1 | 11-12-2019 |
| | | US 2020000102 A1 | 02-01-2020 |
| | | WO 2018142180 A1 | 09-08-2018 |
| EP 3947215 B1 | 09-11-2022 | AT 522417 A1 | 15-10-2020 |
| | | CA 3127693 A1 | 08-10-2020 |
| | | EP 3947215 A1 | 09-02-2022 |
| | | ES 2937921 T3 | 03-04-2023 |
| | | US 2022128978 A1 | 28-04-2022 |
| | | WO 2020198772 A1 | 08-10-2020 |
| US 6244421 B1 | 12-06-2001 | KEINE | |
| EP 3072835 A1 | 28-09-2016 | AU 2016201667 A1 | 13-10-2016 |
| | | CA 2923598 A1 | 27-09-2016 |
| | | CN 106005957 A | 12-10-2016 |
| | | DK 3072835 T3 | 29-07-2019 |
| | | EP 3072835 A1 | 28-09-2016 |
| | | ES 2734230 T3 | 04-12-2019 |
| | | JP 6369368 B2 | 08-08-2018 |
| | | JP 2016183042 A | 20-10-2016 |
| | | NZ 717995 A | 27-04-2018 |
| | | PL 3072835 T3 | 31-10-2019 |
| | | RU 2016111113 A | 28-09-2017 |
| | | SG 10201601884X A | 28-10-2016 |
| | | TW 201634364 A | 01-10-2016 |
| | | US 2016280469 A1 | 29-09-2016 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2022002510 A1